# DEMANDE DE BREVET EUROPEEN

(11) **EP 0 633 485 A1**
(43) Date de publication de la demande: **11.01.1995**
(21) Numéro de dépôt: 94401519.7
(22) Date de dépôt: 04.07.1994
(51) Int. Cl.: G02B 6/38

(54) **Ensemble de connexion multi-voies à fibres optiques et éléments de connexion**

(30) Priorité: 08.07.1993 FR 9308401
(71) Demandeur: FRAMATOME CONNECTORS INTERNATIONAL, 92400 Courbevoie (FR)
(72) Inventeur: Debeaux, Alain, F-92290 Chatenay Malabry (FR); Gazelot, Yves, F-77170 Brie Comte Robert (FR)
(74) Mandataire: Keib, Gérard

(57) **Abrégé**

L'invention concerne un ensemble de connexion multi-voies à fibres optiques du type à fiche et embase comportant :
- pour la fiche :
   - une première platine (3₁) formant corps de fiche,
   - des plaques (2₁) logées dans la première platine (3₁) et présentant des premiers logements tubulaires (19) pour des connecteurs à fibre optique, et présentant un premier moyen (109) de verrouillage.
- pour l'embase :
   - une deuxième platine (3₂) formant corps d'embase
   - des deuxièmes plaques (2₂) logées dans la deuxième platine (3₂) et présentant des deuxièmes logements tubulaires (19) pour des connecteurs à fibre optique (200), et présentant un deuxième moyen (109) de verrouillage

Il comporte également :
- des porte-manchons (1) montés dans les logements (19).
- des manchons d'alignement (6) disposés dans chacun des porte-manchons (1).

## Description

La présente invention a pour objet un ensemble de connexion multi-voies à fibres optiques du type fiche et embase.

On connaît déjà de l'art antérieur des ensembles de connexion multi-voies à fibres optiques dans lesquels plusieurs lignes optiques sont connectées entre elles une par une.

La présente invention concerne un ensemble de connexion permettant de relier en une seule manoeuvre une pluralité de lignes de fibres optiques équipées de connecteurs, en particulier conformes au standard industriel de la norme MIL-C-83522, par exemple selon la marque ST de la société A.T.T.

L'invention concerne dans ce but un ensemble de connexion multi-voies à fibres optiques du type à fiche et embase caractérisé en ce qu'il comporte :
- pour la fiche :
   - une première platine formant corps de fiche,
   - au moins une première plaque logée dans la première platine et présentant une pluralité de premiers logements tubulaires adaptés à recevoir des premiers connecteurs à fibre optique, la première plaque comportant également une pluralité de premières parties arrière prolongeant chacun des premiers logements et présentant un premier moyen de verrouillage d'un premier connecteur à fibre optique.
- pour l'embase :
   - une deuxième platine formant corps d'embase
   - au moins une deuxième plaque logée dans la deuxième platine et présentant une pluralité de deuxièmes logements tubulaires disposés en vis-à-vis des premiers logements et adaptés à recevoir des deuxièmes connecteurs à fibre optique, la deuxième plaque comportant également une pluralité de deuxièmes parties arrière prolongeant chacun desdits logements et présentant un deuxième moyen d'un verrouillage d'un deuxième connecteur à fibre optique,
   et en ce qu'il comporte également :
   - des porte-manchons montés dans un des logements d'un couple comprenant un premier et un deuxième logements en vis-à-vis,
   - des manchons d'alignement disposés dans chacun des porte-manchons.

La première et la deuxième platine peuvent présenter au moins une paire d'éléments de détrompage complémentaires.

La première et la deuxième plaque peuvent être identiques.

La première et la deuxième embase peuvent être identiques.

L'ensemble de connexion selon l'invention peut être tel que ledit montage d'au moins un porte-manchon dans le logement correspondant est réalisé par encliquetage dans la partie arrière correspondante de la plaque correspondante.

Au moins une partie arrière peut comporter des lumières d'introduction d'un clip.

Au moins un des premiers et deuxièmes moyens de verrouillage peut comporter deux tétons périphériques (voir la norme ST précitée).

L'ensemble de connexion selon l'invention peut être tel qu'au moins un des premiers et deuxièmes connecteurs à fibre optique comporte :
- un corps central allongé logeant la terminaison de fibre avec une région cylindrique dont la section extérieure est homologue de la section intérieure du logement tubulaire de l'embase, et
- deux bras élastiquement déformables, reliés chacun par l'une de leurs extrémités à une région postérieure du corps central et s'étendant dans leur ensemble le long du corps central sensiblement parallèlement à l'axe général de celui-ci et en direction des tétons respectifs de ladite partie arrière, l'extrémité libre de chaque bras portant chacune un flasque pourvu, sur sa face tournée vers le corps central, d'une alvéole de section au moins partiellement homologue de la section extérieure du téton respectif de ladite partie arrière.

L'invention concerne également un élément de connexion multi-voies à fibres optiques caractérisé en ce qu'il comporte :
- une platine
- au moins une plaque logée dans la platine présentant une pluralité de logements tubulaires adaptés à recevoir un connecteur à fibre optique ladite plaque comportant également une pluralité de parties arrière prolongeant chacun desdits logements et présentant un moyen de verrouillage dudit connecteur à fibre optique.

L'élément de connexion peut également comporter des porte-manchons montés dans chacun desdits logements, et des manchons d'alignement disposés dans chacun des porte- manchons.

Selon un mode de réalisation préféré ledit montage des porte-manchons dans les logements est réalisé par encliquetage dans les parties arrière de ladite plaque.

D'autres caractéristiques et avantages de l'invention apparaîtront mieux à la lecture de la description qui va suivre, donnée à titre d'exemple non limitatif, en liaison avec les dessins qui représentent :
- les figures 1a à 1d, respectivement, un élément de connexion d'un ensemble, susceptible de former une fiche, respectivement en vue de face, en vue de dessus, en vue d'arrière et en vue de côté, la figure le représentant plus particulièrement une embase montée sur un support,
- la figure 2, une vue en coupe d'un ensemble de connexion pouvant former fiche ou embase selon un mode de réalisation préféré de l'invention,
- la figure 3a étant des coupes respectivement suivant A et suivant B de la figure 2,
- les figures 4 et 5 représentant respectivement en coupe et en vue latérale, une fiche encliquetable de connexion de fibre optique susceptible d'être utilisée avec l'ensemble de connexion selon l'invention.

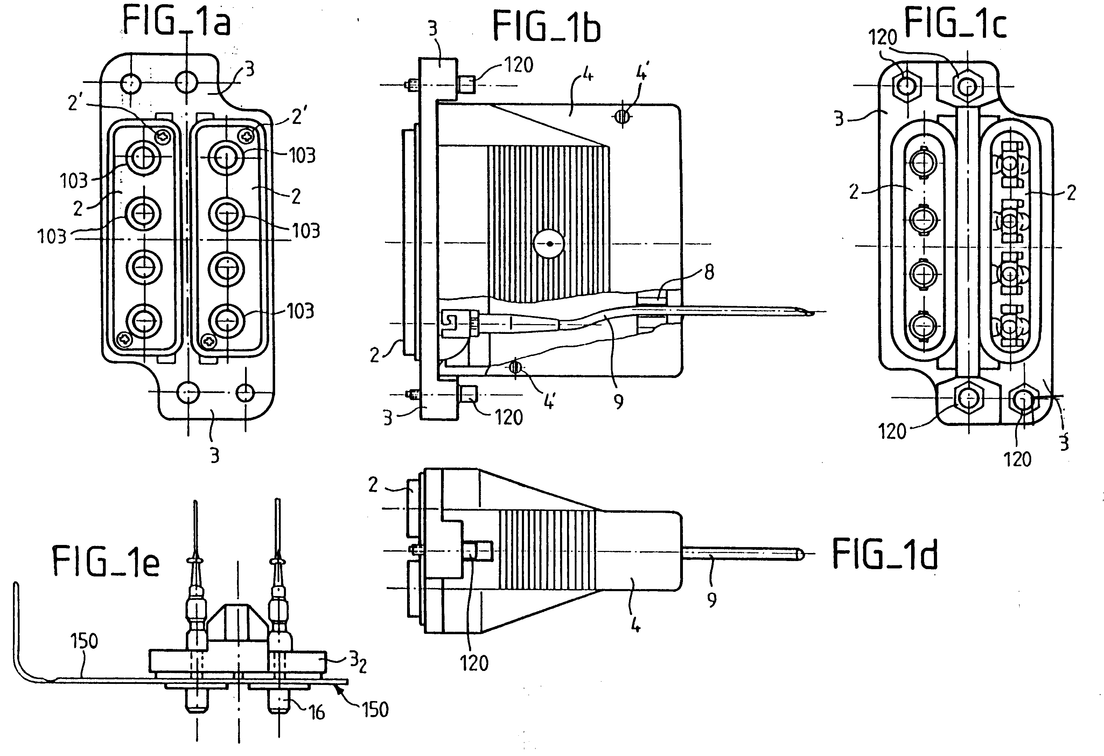

Selon les figures 1a à 1d, un élément de connexion formant une fiche selon l'invention comporte une platine référencée 3 dans laquelle sont montées, par exemple par des vis autotaraudeuses, deux plaques référencées 2 dont chacune permet d'assurer la connexion d'une rangée de 4 fibres optiques. Un capot référencé 4 qui est constitué de deux pièces identiques fixées l'une sur l'autre par des vis autotaraudeuses 4' permet de refermer l'arrière de l'élément de connexion. Le capot est encliqueté sur la platine 3 et contient une barrette multiclip 8 dans laquelle sont encliquetés les câbles 9 des bretelles de connexion optique. Le capot 4 protège la connectique qui permet la manipulation de la fiche grâce à ses faces munies de striures.

Un élément de connexion présente également deux détrompeurs (mâles pour la fiche) présentant chacun 6 codages possibles et permettant également la fixation de l'élément de connexion formant embase sur un panneau 150 (voir figure 1e).

L'élément de connexion formant embase (fig. 1e) est généralement identique à celui formant fiche. Ses éléments de détrompage 120 sont homologues à ceux de la fiche (donc femelles dans l'exemple représenté) et il est monté sur un panneau 150.

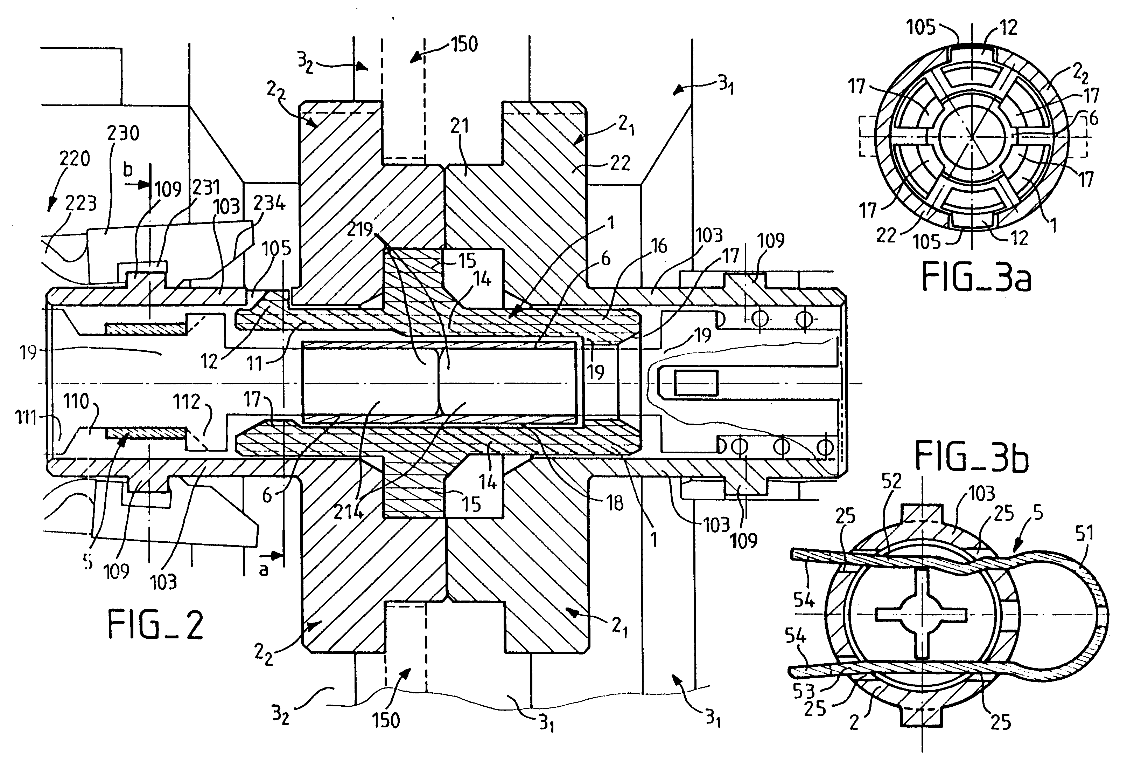

Selon la figure 2, un ensemble de connexion comporte une embase présentant une platine 3₂ équipée comme indiqué précédemment, de deux détrompeurs mâles dont chacun présente 6 codage possibles qui servent également à la fixation sur le panneau 150. Il y a plusieurs possibilités de fixations sur le panneau, soit en utilisant les détrompeurs, soit en utilisant des vis standard à tête fraisée ou cylindrique sans utiliser les écrous du détrompeurs.

L'embase présente également deux plaques référencées 2₂ qui sont fixées sur la platine 3₂. Des porte-manchons, au nombre de huit, soit quatre pour chaque plaque 2₂ présentant des cliquets 12, sont encliquetés en 105 à la partie arrière 103 des porte-manchons 1. Les porte-manchons 1, de forme générale cylindrique, présentent une région de diamètre élargi 15, permettant leur venue en butée dans un logement correspondant de la plaque 2₂ sous l'action de leurs cliquets 12 en partie arrière, et à leur partie avant, un chanfrein 17 permettant de favoriser l'introduction d'une fiche optique. Des manchons d'alignement référencés 6 sont montés dans une région cylindrique 18 du manchon d'alignement 1, cette région cylindrique étant délimitée vers l'avant par une région 19 de plus faible diamètre formant butée, et vers l'arrière par des cliquets 17. La partie arrière des porte-manchons 1 comporte six bras 11 dont 2 portent des cliquets 12 de verrouillage du porte-manchon 1 dans la platine 2₂ et dont les quatre autres bras portent, à l'intérieur, les cliquets 17 (voir figure 3a).

La partie arrière 103 des plaques 2₂ comporte chacune deux ergots 109 à 180° qui sont adaptés à la connexion des connecteurs conformes au standard industriel de la norme MIL-C-83522.

La fiche comporte, quant à elle, une platine référencée 3₁ et constituée par une pièce identique à la platine 3₂ de l'embase comporte deux détrompeurs femelles à deux fois six codages équipés de vis de fixation sur les détrompeurs de l'embase. Deux plaques, référencées 2₁ pour deux rangées de connexion) sont constituées par des pièces identiques aux pièces 2₂ de l'embase, elles sont également fixées sur la platine 3₁ par des vis autotaraudeuses. On comprendra donc que les plaques 2₁ sont susceptibles également de recevoir, grâce à leurs ergots 109, des fiches optiques du type selon la marque ST précitée.

En variante, les porte-manchons 1 et les manchons 6 peuvent être disposés dans les plaques 2₁ des fiches.

L'ensemble de connexion selon l'invention est également susceptible de recevoir des fiches encliquetables de connexion de fibre optique telles que décrites dans la demande de brevet français 92 12015 déposée par la demanderesse le 9 octobre 1992.

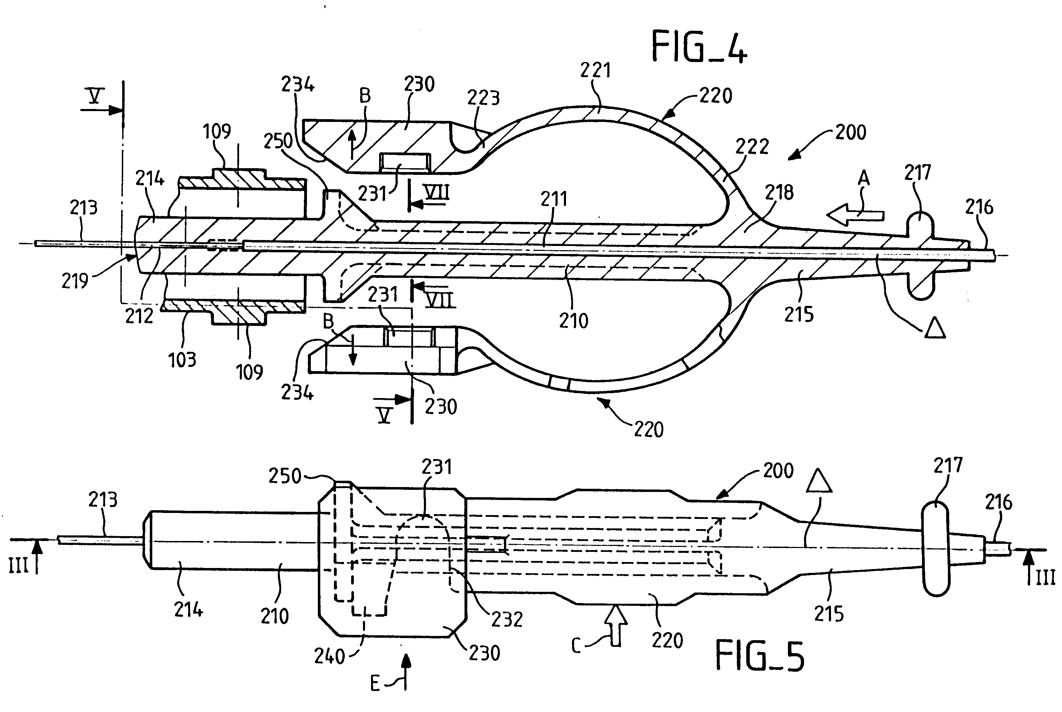

La figure 4 représente une telle fiche avant clivage de la face d'extrémité 219 et arasage de l'extrémité dépassante 213 de la fibre 24. L'entrée du tube 103 de la plaque 2 est dans une position intermédiaire ou la fiche est légèrement introduite dans cette dernière avant le début de la phase d'insertion finale et de verrouillage.

L'élément de connexion désigné par la référence générale 200 comporte essentiellement un corps central allongé 210 et deux bras latéraux 220 dont la position générale forme avec le corps 210 un plan commun appelé par la suite plan d'ensemble (plan contenant le corps, les bras ainsi que l'axe Δ de la fibre correspondant au plan de coupe de la figure 4).

Ces bras sont terminés chacun par un flasque respectif 230 destiné à réaliser l'encliquetage avec les tétons 109 de la plaque 2₁ ou 2₂ de la manière qui sera expliquée plus loin.

Plus précisément, le corps 210 a une forme générale sensiblement cylindrique et loge la terminaison de fibre comprenant, en 211, la fibre revêtue de sa gaine et, en 212, la fibre nue proprement dite. La partie de fibre émergeante repérée 213 est coupée après surmoulage de la fiche, la fiche 219 de la fiche est ensuite polie, et l'embout 214 guidé par l'entonnoir 105, vient se centrer précisément dans l'alésage central d'un élément de connexion du type ST, assurant le positionnement correct de la fibre face à la lentille du composant électro-optique de l'élément de connexion ST.

Par la suite, on appellera région antérieure ou région frontale, la région 214 du corps central et donc l'élément de connexion devant être insérée, et région postérieure ou région arrière, la région 215 située à l'opposé, du côté du cordon 216 de la fibre à raccorder.

Un relief périphérique 217 peut être prévu au moulage pour faciliter les opérations d'insertion et de retrait dans le sens de la flèche A ou dans le sens inverse.

Enfin, le corps central porte un élément en forme de disque 250 dont le diamètre extérieur est ajusté au diamètre intérieur du cylindre 103 formant la partie arrière de la plaque 2. Cet élément est destiné à opérer un guidage précis de l'élément de connexion dont le cylindre 103 de la plaque lors de son insertion dans celui-ci. Sur le corps central, sont montés deux bras élastiquement déformables 220 qui présentent, sur la majeure partie de leur longueur, une forme aplatie de section par exemple rectangulaire allongée, dont la largeur (qui correspond au plan de coupe de la figure 4) est située dans le même plan que le corps central dont la plus grande longueur (visible en projection figure 5 sur le plan de la figure), est perpendiculaire à ce même plan.

De plus, outre leur forme aplatie, les bras sont courbés comme illustré à la figure 4, c'est-à-dire avec leur rayon de courbure contenu dans le plan d'ensemble et leur concavité tournée vers le corps. Cette conformation permet d'accroître l'élasticité des bras en direction axiale, c'est-à-dire dans le sens d'un effort tendant à rapprocher les deux extrémités 222 et 223 des bras.

Chacun des bras est fixé par une de ses extrémités, référencées 222 et une région 218 du corps central située dans la moitié postérieure de celui-ci, cette zone de liaison réalisant un effet de charnière élastique pour le corps 210 et le bras 220. Ce dernier peut ainsi s'écarter radialement du corps sous l'effet d'une sollicitation extérieure appliquée selon la flèche B.

L'autre extrémité 223 des bras, c'est-à-dire leur extrémité libre, est pourvue d'un flasque 230. Chacun de ces flasques 230 est constitué d'un élément aplati de contour approximativement carré, essentiellement non déformable, s'étendant dans un plan perpendiculaire au plan d'ensemble et parallèle à l'axe principal Δ de l'élément de connexion de la fibre.

Les deux flasques sont distants l'un de l'autre d'un écartement correspondant sensiblement au diamètre du cylindre 103, ou légèrement inférieur, ces flasques étant destinés à se plaquer contre ce cylindre 103 et coiffer, par leurs alvéoles 231, les tétons 109 après insertion complète.

Plus précisément, pour coopérer avec le téton respectif 109, chacun de ces flasques comporte sa face tournée vers le corps central une alvéole 231 ayant, au moins en partie, une section homologue de celle des tétons 109, c'est-à-dire peut par exemple présenter une section au moins en partie circulaire. L'alvéole est cependant ouverte latéralement vers le bas en 232 d'ouverture débouchant sur une partie ouverture 233. Cette configuration a pour objet de ménager une possibilité de dégagement du téton 109 par déplacement vers le bas des flasques sans écartement radial de ceux-ci, c'est-à-dire sans déplacement dans le sens de la flèche B.

On notera en outre que chacun des flasques comporte en partie frontale, un face biseautée 234 jouant le rôle de rampe et servant à provoquer l'écartement des flasques (flèche B) lors de la venue en contact de ceux-ci avec les tétons 109 pendant l'enfoncement de l'élément de connexion dans la plaque 2.

L'ensemble de la fiche est avantageusement réalisé sous forme monobloc en une matière plastique présentant à la fois de bonnes caractéristiques de résilience pouvant être moulée avec une précision dimensionnelle (faible retrait). On peut par exemple choisir une matière plastique telle que le polytérephtalate de butylène.

Les manchons d'alignement 6 peuvent être réalisés sous forme de manchons fendus soit métalliques soit céramiques, ce qui permet une réduction des jeux radiaux et donc des atténuations.

Les figures 2 et 3b représentent une variante du montage de la fiche ST laquelle présente une rainure périphérique 110 délimitée entre deux régions annulaires 111 et 112, et dans laquelle s'engagent les bras 52 d'un clip 5 présentant une région centrale recourbée 51. Les bras 52 s'évasent en 53 près de leur extrémité 54 et s'engagent dans quatre lumières 25 du tube cylindrique 103.

## Revendications

1. Ensemble de connexion multi-voies à fibres optiques du type à fiche et embase caractérisé en ce qu'il comporte :
- pour la fiche :
- une première platine (3₁) formant corps de fiche,
- au moins une première plaque (2₁) logée dans la première platine (3₁) et présentant une pluralité de premiers logements tubulaires (19) adaptés à recevoir des premiers connecteurs à fibre optique, la première plaque (2₁) comportant également une pluralité de premières parties arrière (103) prolongeant chacun des premiers logements (19) et présentant un premier moyen (109) de verrouillage d'un premier connecteur à fibre optique.
- pour l'embase :
- une deuxième platine (3₂) formant corps d'embase
- au moins une deuxième plaque (2₂) logée dans la deuxième platine (3₂) et présentant une pluralité de deuxièmes logements tubulaires (19) disposés en vis-à-vis des premiers logements et adaptés à recevoir des deuxièmes connecteurs à fibre optique (200), la deuxième plaque (2₂) comportant également une pluralité de deuxièmes parties arrière (103) prolongeant chacun desdits logements (19) et présentant un deuxième moyen (109) de verrouillage d'un deuxième connecteur à fibre optique (200)
et en ce qu'il comporte également :
- des porte-manchons (1) montés dans un des logements (19) d'un couple comprenant un premier et un deuxième logements en vis-à-vis,
- des manchons d'alignement (6) disposés dans chacun des porte-manchons (1).

2. Ensemble de connexion selon la revendication 1, caractérisé en ce que la première (3₁) et la deuxième (3₂) platine présentent au moins une paire d'éléments de détrompage complémentaires.

3. Ensemble de connexion selon la revendication 1, caractérisé en ce que la première (2₁) et la deuxième (2₂) plaques sont nominalement identiques.

4. Ensemble de connexion selon une des revendications 1 ou 3, caractérisé en ce que la première (3₁) et la deuxième (3₂) platines sont nominalement identiques.

5. Ensemble de connexion selon une des revendications précédentes, caractérisé en ce que ledit montage d'au moins un porte-manchon (1) dans le logement correspondant (19) est réalisé par encliquetage (12) dans la partie arrière correspondante (103) de la plaque (2₁, 2₂) correspondante.

6. Ensemble de connexion selon une des revendications précédentes, caractérisé en ce qu'au moins une dite partie arrière (103) comporte des lumières (25) d'introduction d'un clip (51, 52, 53, 54).

7. Ensemble de connexion selon une des revendications précédentes, caractérisé en ce qu'au moins un des premiers et deuxièmes moyens de verrouillage comporte deux tétons périphériques (109).

8. Ensemble de connexion selon la revendication 7, caractérisé en ce qu'au moins un des premiers et deuxièmes connecteurs à fibre optique comporte :
- un corps central allongé (210) logeant la terminaison de fibre (211, 212) avec une région cylindrique (250) dont la section extérieure est homologue de la section intérieure du logement tubulaire de l'embase, et
- deux bras (220) élastiquement déformables, reliés chacun par l'une (222) de leurs extrémités à une région postérieure (218) du corps central et s'étendant dans leur ensemble le long du corps central sensiblement parallèlement à l'axe général de celui-ci et en direction des tétons respectifs (109) de ladite partie arrière, l'extrémité libre (223) de chaque bras portant chaucne un flasque (230) pourvu, sur sa face tournée vers le corps central, d'une alvéole (231) de section au moins partiellement homologue de la section extérieure du téton respectif (109) de ladite partie arrière.

9. Elément de connexion multi-voies à fibres optiques caractérisé en ce qu'il comporte :
- une platine (3₁, 3₂)
- au moins une plaque (2₁, 2₂) logée dans la platine (3₁, 3₂) présentant une pluralité de logements tubulaires (19) adaptés à recevoir un connecteur à fibre optique (200) ladite plaque (2₁, 2₂) comportant également une pluralité de parties arrière (103) prolongeant chacun desdits logements (19) et présentant un moyen de verrouillage (109) dudit connecteur à fibre optique.

10. Elément de connexion selon la revendication 9, caractérisé en ce qu'il comporte :
- des porte-manchons (1) montés dans chacun desdits logements (19)
- des manchons d'alignement (6) disposés dans chacun des porte- manchons (1).

11. Elément de connexion selon la revendication 10, caractérisé en ce que ledit montage des porte-manchons (1) dans les logements (19) est réalisé par encliquetage (109) dans les parties arrière (103) de ladite plaque.
